# EUROPEAN PATENT APPLICATION

(11) **EP 1 935 300 A1**
(43) Date of publication of application: **25.06.2008**
(21) Application number: 07270072.7
(22) Date of filing: 11.12.2007
(51) Int. Cl.: A47J 36/02, A21B 3/13, H05B 6/64, B65D 81/34

(54) **Food support for use in a microwave oven**

(30) Priority: 21.12.2006 GB 0625388
(71) Applicant: MERRYCHEF LIMITED, Aldershot, Hampshire GU12 5XA (GB)
(72) Inventor: Thorneywork, Nigel, Guildford, Surrey GU3 2AX (GB); Hind, Gordon, Godalming, Surrey GU5 1RW (GB)
(74) Representative: Mitchell, Matthew Benedict David

(57) **Abstract**

A food support (4) for use in a microwave oven comprising a plurality of surfaces for supporting a plurality of food items at different heights with respect to the base of the oven. The plurality of surfaces comprises a first set of surfaces (7) at a first height and a second set (8) of surfaces at a second height. Each surface from the first set of surfaces (7) is adjacent only to surfaces from the second set (8) of surfaces, and each surface from the second set of surfaces is adjacent only to surfaces from the first set of surfaces. This reduces the effect of a food item shielding an adjacent food item, which otherwise leads to uneven heating of food items in the microwave oven.

## Description

### TECHNICAL FIELD

The present invention relates to the field of food supports for use in microwave ovens, and in particular trays for use in microwave ovens.

### BACKGROUND

Microwave ovens are used extensively in the catering industry and home kitchens for heating food. A problem with heating food in microwave ovens is that food can be heated unevenly. This is partly due to uneven microwave distribution within the chamber of the microwave oven, leading to hot and cold spots.

Domestic microwave ovens typically have a rotating turntable to improve the evenness of heating within the oven. By placing food on the turntable and moving it within the oven chamber, most portions of the food the food move through hot and cold spots and so are heated evenly. Catering microwave ovens typically do not use turntables, as the geometry of a round turntable within a rectangular chamber reduces the usable space available for placing food. In order to reduce the effects of hot and cold spots, catering microwave ovens typically use twin magnetrons to generate microwaves, rather than single magnetrons. Furthermore, a "stirrer" can be used, which is a reflective rotating fan that reflects microwave energy to different parts of the chamber.

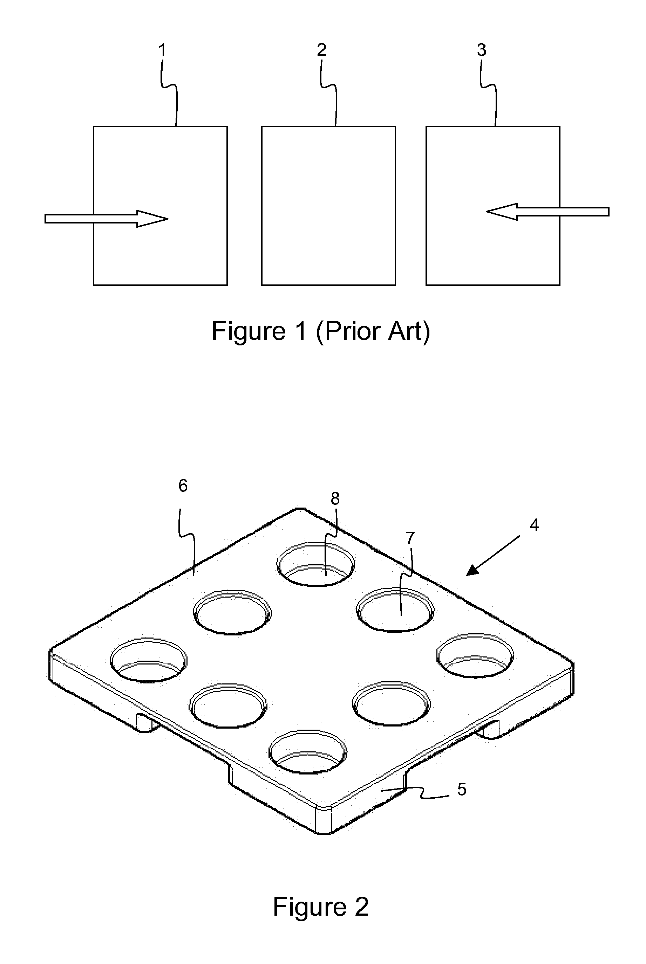

Uneven heating also arises because of "shielding". An example of shielding is illustrated in Figure 1. If, for example, three containers of food are placed in the chamber of a microwave oven, food in containers 1 and 3 may be positioned between the incoming microwave radiation and the food in container 2. The food in containers 1 and 3 will therefore be heated more rapidly than the food in container 2, and so will cook more quickly. This leads to either the food in containers 1 and 3 being overcooked or the food in container 2 being undercooked. This can be a particular problem for foodstuffs that require carefully controlled heating to be properly cooked, such as soufflés. Shielding is also a problem for frozen foods, as the microwave absorption characteristics of ice are different to those of water, and so defrosted areas can heat up very quickly whilst other areas may still be defrosting.

### SUMMARY

The inventors have realised that it would be beneficial to allow several food products to be heated in a microwave oven at once, whilst reducing the effects of shielding. According to a first aspect of the invention, there is provided a food support for use in a microwave oven comprising a plurality of surfaces for supporting a plurality of food items at different heights with respect to the base of the oven. The plurality of support surfaces comprises a first set of surfaces at a first height and a second set of surfaces at a second height. The surfaces are arranged such that each surface from the first set of surfaces is adjacent only to surfaces from the second set of surfaces, and each surface from the second set of surfaces is adjacent only to surfaces from the first set of surfaces. This reduces the effects of shielding that would otherwise be caused by a food item on one surface on food items on the surfaces at the same height.

The food support may comprise a tray integrally formed with the plurality of surfaces. This simplifies production of the food support. Where the food support is a tray, the surfaces may comprise indentations in a surface of the tray.

The food support may be manufactured from a substantially microwave transparent material, in order to minimise any shielding effects from the food support itself. Suitable materials include polypropylene and polytetraflouroethylene.

In order to make efficient use of space within the chamber of a microwave oven, it is preferred that the food support has similar dimensions to the base of a microwave oven chamber.

The different heights between the plurality of surfaces may be determined based on the expected height of the foodstuff to be heated. For example, the different heights between the plurality of surfaces may be between 20 and 30 mm.

The food support may comprise means to stack the food support onto a further food support. In this way, food supports can be stacked to further increase the use of space in the chamber of a microwave oven.

### BRIEF DESCRIPTION OF THE DRAWINGS

Figure 1 illustrates schematically the prior art problem of shielding in a microwave oven;
Figure 2 shows a perspective view of a tray for supporting food to be heated in a microwave oven according to the present invention;
Figure 3 illustrates schematically a plan and a cross-section view of the tray of Figure 2;
Figure 4 shows a perspective view of the tray of Figure 2 being loaded into the chamber of a catering microwave oven; and
Figure 5 shows a plan and a cross-section view of a tray according to a second specific embodiment.

### DETAILED DESCRIPTION

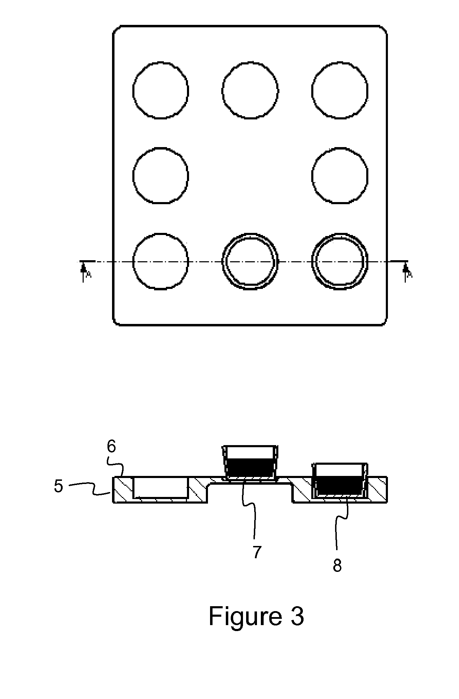

According to a first embodiment, and referring to Figure 2, a tray 4 is provided for supporting foodstuffs during microwave heating. The tray 4 is made from a substantially microwave transparent material that has a low dielectric loss. Polypropylene or polytetraflouroethylene (PTFE) are suitable materials. The tray comprises a supporting wall 5 extending around its perimeter, and an upper surface 6 which, in use, is supported above a base surface of a microwave oven by the supporting wall 5. The surface 6 comprises two sets of indentations. A first set of indentations 7 are shallow indentations in the upper surface 6, and a second set of indentations 8 are deeper indentations in the upper surface 6. The indentations 7, 8 are arranged such that two deep indentations 8 are never adjacent to one another, and similarly two shallow indentations 7 are never adjacent to one another. This is more clearly illustrated in Figure 3.

When it is required to cook several portions of food, each portion of food is located in an indentation 7, 8. During heating, the shielding effect of adjacent food portions is greatly reduced because each food portion is at a different height in the microwave oven 8 to its neighbouring food portions. The height between neighbouring food portions is predetermined depending on the height of the foodstuff to be heated. For example, the height between levels for a tray used to heat soufflés is around 24 mm.

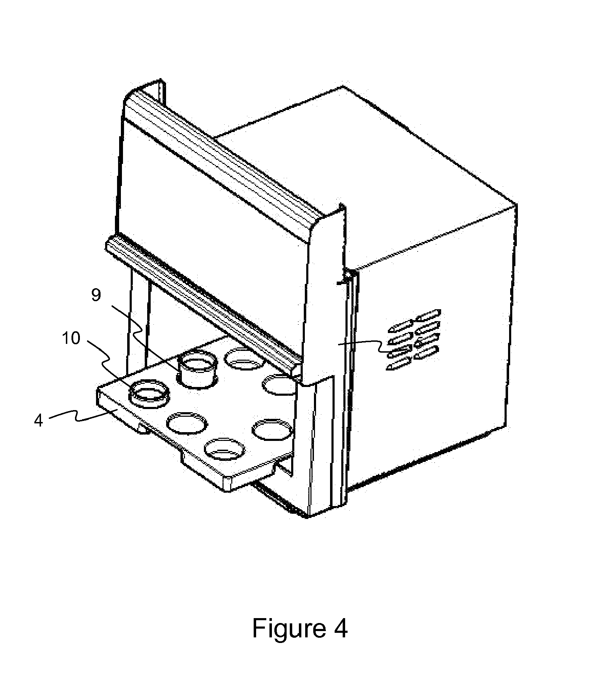

The food portions may be placed directly in an indentation, or may already be in individual containers. Where the food is in an individual container, such as a soufflé dish, the container is placed in the indentation, as shown in Figure 4. Soufflé container 9 is located in a shallow indentation 7 of the tray 4, and soufflé container 10 is located in a deep indentation of the tray 4.

The tray 4 has external planar dimensions slightly less than the internal dimensions of the chamber of the microwave oven in which the tray is to be used. This ensures that the available cooking space within the microwave oven is used as efficiently as possible. Suitable tray dimensions are typically around 350 mm by 320 mm.

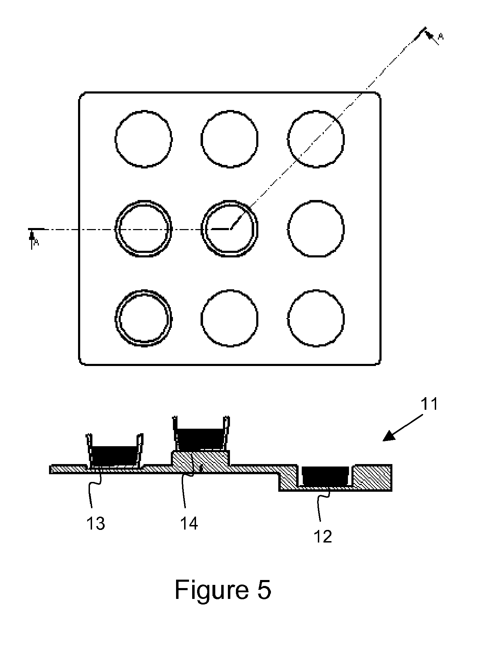

The example described above refers to two sets of indentations, providing only two heights at which food can be placed relative to the base of the microwave oven. It will be appreciated that a single tray may comprise indentations at more than two heights, reducing the effects of shielding further and increasing the usable space within the chamber of the microwave oven. An example of this is illustarated in Figures 5. According to a second embodiment, 1 tray 11 comprises surfaces at a lower layer 12, and a middle layer 13. As with the first embodiment, surfaces adjacent to one another are at different levels. A further raised surface 14 is provided in the centre of the tray. The raised surface 14 provides a third level on which to support a foodstuff. This arrangement provides more surfaces at different levels for supporting foodstuffs than the first embodiment, and so is more efficient at utilizing space within the charner of a microwave oven.

According to a third embodiment, each tray further comprises means for stacking the tray on top of another tray. By stacking trays, it will be appreciated that rather than being limited to two or three levels levels, the number of levels at which food containers can be placed is increased. The trays of the third embodiment may comprise the trays of either the frist or the second embodiment.

It will be appreciated by the person of skill in the art that various modifications may be made to the above described embodiments without departing from the scope of the present invention.

## Claims

1. A food support for use in a microwave oven comprising a plurality of surfaces for supporting a plurality of food items at different heights with respect to the base of the oven, **characterized in that** the plurality of support surfaces comprises a first set of surfaces at a first height and a second set of surfaces at a second height, wherein each surface from the first set of surfaces is adjacent only to surfaces from the second set of surfaces, and each surface from the second set of surfaces is adjacent only to surfaces from the first set of surfaces.

2. A food support as claimed in claims 1, wherein the food support comprises a tray integrally formed with the plurality of surfaces.

3. A food support as claimed in claim 2, wherein the surfaces comprise indentations in a surface of the tray.

4. A food support as claimed in claim 1, 2 or 3, wherein the food support comprises a substantially microwave transparent material.

5. A food support as claimed in claim 4, wherein the food support is formed from a material selected from polypropylene and polytetraflouroethylene.

6. A food support as claimed in any one of claims 1 to 5, wherein the food support has similar dimensions to the base of a microwave oven chamber.

7. A food support as claimed in any one claims 1 to 6, wherein the different heights vary by between 20 and 30 mm.

8. A food support as claimed in any one of claims 1 to 7, comprising means to stack the food support onto a further food support.
